# EUROPEAN PATENT APPLICATION

(11) **EP 4 653 300 A1**
(43) Date of publication of application: **26.11.2025**
(21) Application number: 25170842.6
(22) Date of filing: 15.04.2025
(51) Int. Cl.: B62J 9/12, B62J 17/06

(54) **INSTALLATION STRUCTURE FOR OPERATION DEVICE IN SCOOTER LEG SHIELD**

(30) Priority: 24.05.2024 JP 2024084489
(71) Applicant: Suzuki Motor Corporation, Shizuoka 432-8611 (JP)
(72) Inventor: KUNO, Masaaki, Hamamatsu-shi (JP)
(74) Representative: Haseltine Lake Kempner LLP

(57) **Abstract**

An installation structure for an operation device (42). The installation structure is provided in an inner side of a front shield (31) of a straddle-type vehicle (1). An installation surface (33) on which the operation device (42) is installed is formed on an upper portion of the front shield (31). An operation surface (43) of the operation device (42) faces downward, the operation surface being exposed from the installation surface (33).

## Description

### TECHNICAL FIELD

The present disclosure relates to an installation structure for an operation device.

### BACKGROUND ART

A smart entry system has been proposed in which, when an owner carrying a smart key approaches a straddle-type vehicle, a signal from the smart key is sent to unlock a knob of an ignition switch, unlock a seat lock, and the like. It is desirable to provide a key cylinder for emergency unlocking in the straddle-type vehicle in consideration of loss of the smart key and battery exhaustion. In the related art, as this type of straddle-type vehicle, a straddle-type vehicle is known in which a key cylinder for a mechanical key is provided in a storage box of a front leg shield (for example, see JP2005-119421A). The key cylinder described in JP2005-119421A is provided on the inner surface of the storage box so as to be inconspicuous from the front.

However, since the keyhole of the key cylinder described in JP2005-119421A1 faces the side, the visibility of the keyhole is poor, and the workability of the unlocking operation is reduced. On the other hand, when the keyhole is easily visually recognized to improve the workability, there is a problem in that the keyhole is conspicuous even in a case other than an emergency and the appearance and crime prevention deteriorate.

### SUMMARY OF INVENTION

Aspect of non-limiting embodiments of the present disclosure relates to provide an installation structure for an operation device that is inconspicuous in a normal state and that has excellent operability in an emergency.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided an installation structure for an operation device (42), the installation structure being provided in an inner side of a front rack (31) of a straddle-type vehicle (1),
in which an installation surface (33) on which the operation device (42) is installed is formed on an upper portion of the front rack (31), and
an operation surface (43) of the operation device (42) faces downward, the operation surface being exposed from the installation surface (33).

### BRIEF DESCRIPTION OF DRAWINGS

Exemplary embodiment(s) of the present invention will be described in detail based on the following figures, wherein:
FIG. 1 is a side view of a straddle-type vehicle according to the present embodiment;
FIG. 2 is a rear view of the vehicle front portion of the straddle-type vehicle according to the present embodiment;
FIG. 3 is a cross-sectional view of the vehicle front portion in FIG. 2 taken along a line A-A;
FIG. 4 is a view of the vehicle rear portion in FIG. 3 as viewed from a direction F1;
FIG. 5 is a view of the vehicle rear portion in FIG. 3 as viewed from a direction F2; and
FIG. 6 is a view of the vehicle rear portion in FIG. 3 as viewed from a direction F3.

### DESCRIPTION OF EMBODIMENTS

An operation device is provided on the inner side of a front rack of a straddle-type vehicle according to an aspect of the present disclosure. In an installation structure for the operation device, the operation device is installed on the installation surface of the upper portion of the front rack, and the operation surface of the operation device exposed from the installation surface faces downward. In a normal state, the driver and the third party look down at the front rack, and the installation surface of the upper portion of the front rack is positioned in a blind spot for the driver and the third party. The operation surface that is exposed from the installation surface is inconspicuous, and deterioration in crime prevention and appearance is prevented. In an emergency, the driver lowers the posture and looks up at the front rack from below, so that the operation surface can be easily seen, and the storage space of the front rack is used as a working space, thereby improving the workability.

### Embodiment

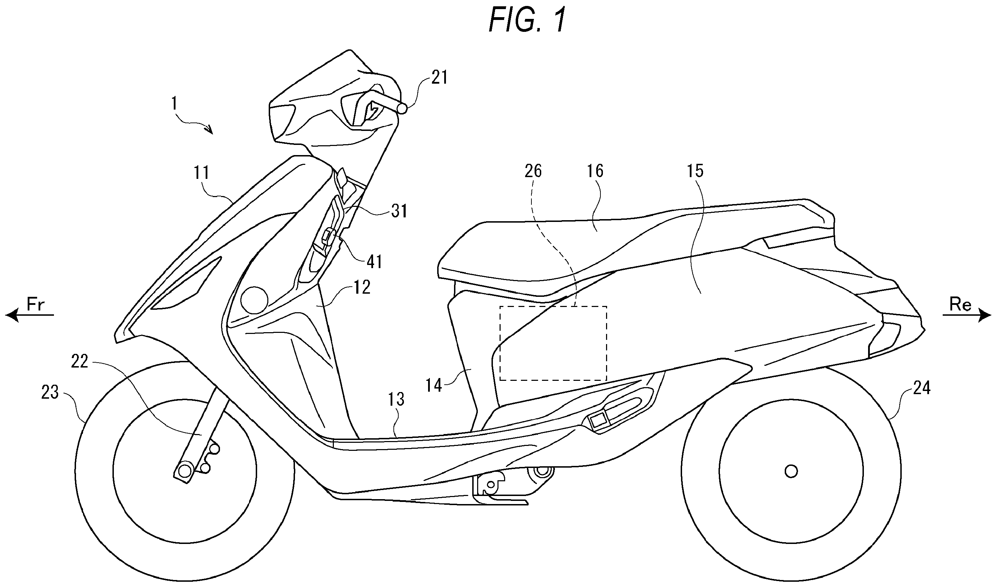

Hereinafter, a straddle-type vehicle according to an embodiment will be described with reference to the accompanying drawings. FIG. 1 is a side view of the straddle-type vehicle according to the present embodiment. In the following drawings, an arrow Fr indicates the vehicle front side, an arrow Re indicates the vehicle rear side, an arrow L indicates the vehicle left side, and an arrow R indicates the vehicle right side.

As shown in FIG. 1, a straddle-type vehicle 1 is equipped with various covers that are vehicle body exteriors on an underbone vehicle body frame (not shown). The straddle-type vehicle 1 is provided with a front cover 11 on the vehicle front side, and a front leg shield 12, which protects feet of a rider, on the rear side of the front cover 11. A floor board 13 extends rearward from the lower end of the front leg shield 12, and a body cover 14 and a pair of side covers 15 are provided on the rear side of the floor board 13. A seat 16 is provided on the upper portion of the side cover 15, and a battery 26 is accommodated below the seat 16.

A handle 21 is provided on the upper side of the front cover 11, and a front wheel 23 is rotatably supported via a pair of front forks 22 on the lower side of the front cover 11. A swing arm (not shown) with a motor (not shown) is provided on the lower side of the side cover 15. The swing arm is swingably coupled to the vehicle body frame. A rear wheel 24 is rotatably supported on the rear portion of the swing arm. The swing arm has a left side surface covered with a swing arm cover (not shown). Power is transmitted from the motor to the rear wheel 24 via a belt-type continuously variable transmission (not shown) inside the swing arm cover.

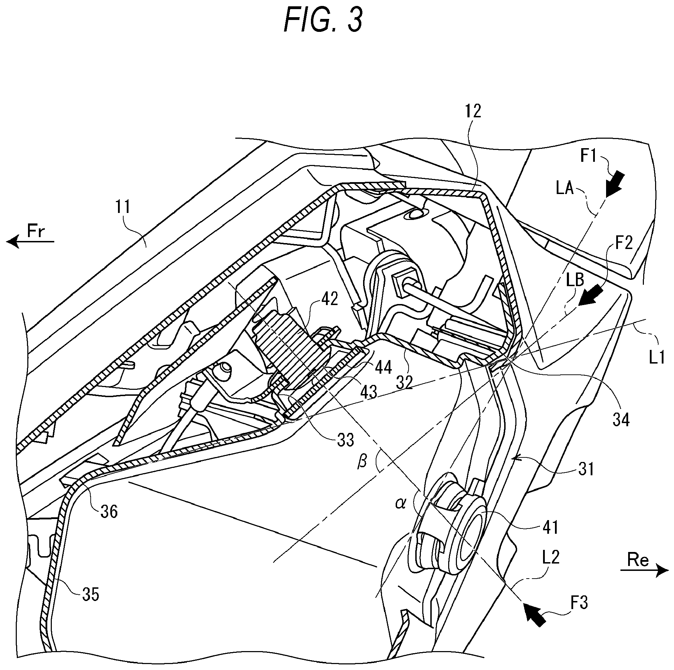

A front rack 31 is provided in the upper left side of the front leg shield 12. The rear surface of the front rack 31 is open. A storage space for a small article is formed inside the front rack 31. The inner portion of the front rack 31 in the vehicle width direction protrudes rearward, and a power supply socket 41 is provided in this protruding portion. A plug cable of an electronic device such as a portable device is inserted into the power supply socket 41. The front rack 31 can store the electronic device being charged. An operation device 42 (see FIG. 3) for unlocking a seat lock or the like in an emergency is provided in the inner side of the front rack 31.

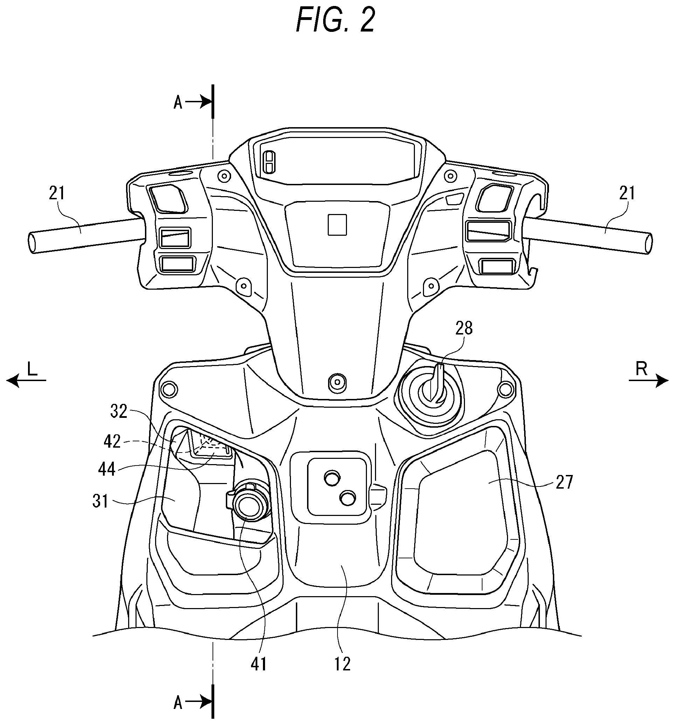

In a straddle-type vehicle in which the seat lock or the like is unlocked by a smart key, an emergency operation device is provided in consideration of loss of the smart key, battery exhaustion, and a blown fuse. In this case, the operation device is often provided at a location that is difficult to see in consideration of the appearance and the theft resistance, but most of such locations are narrow in space and poor in workability. Therefore, in the present embodiment, in order to ensure a sufficient working space, the operation device 42 (see FIG. 2) is provided on the inner upper surface of the front rack 31, and an operation surface 43 of the operation device 42 is positioned at a position that is difficult to see in the upright posture and that is easy to see in the low posture.

The front rack of the straddle-type vehicle will be described with reference to FIGS. 2 and 3. FIG. 2 is a rear view of the vehicle front portion of the straddle-type vehicle according to the present embodiment. FIG. 3 is a cross-sectional view of the vehicle front portion in FIG. 2 taken along a line A-A.

As shown in FIG. 2, a lid 27 that covers a charging port (not shown) is provided in the upper right side of the front leg shield 12, and a knob 28 of an ignition switch is provided on the upper side of the lid 27. The front rack 31 is provided in the upper left side of the front leg shield 12. The inside of the front rack 31 is exposed to the outside from the opening of the front leg shield 12. The substantially left half of the front rack 31 is recessed forward. The substantially right half of the front rack 31 protrudes rearward. A storage space for a small article and the like is formed in the substantially left half of the front rack 31. The power supply socket 41 is provided in the substantially right half of the front rack 31.

As shown in FIGS. 2 and 3, the upper portion of the front rack 31 is recessed upward to form a recess 32 having an inverted V shape in the side view. An installation surface 33 for the operation device 42 is formed on the front inclined surface of the recess 32. The installation surface 33 is slightly recessed obliquely upward and forward from the front inclined surface of the recess 32. A device cover 44 is mounted on the front inclined surface of the recess 32 so as to cover the installation surface 33 from obliquely downward and rearward. The base end of the device cover 44 is openably and closably supported on the recess 32. The operation surface 43 of the operation device 42 is normally hidden behind the device cover 44. In order to prevent the device cover 44 from being opened due to the own weight thereof, the open end of the device cover 44 is hooked in the recess 32 in the closed state.

The operation device 42 is implemented by a key cylinder for a mechanical key. A keyhole into which the mechanical key is inserted is formed on the operation surface 43 of the operation device 42. In an emergency such as loss of the smart key, the device cover 44 is opened to expose the keyhole of the operation surface 43, and the mechanical key is inserted into the keyhole to rotate the key cylinder, thereby unlocking the seat lock. Instead of unlocking the seat lock by operating the operation device 42, the knob 28 of the ignition switch may be unlocked, or the seat lock and the knob 28 of the ignition switch may be unlocked.

The operation surface 43 of the operation device 42 faces obliquely downward and rearward. Since the driver or a third party in an upright posture looks down at the front rack 31 in a normal state, it is difficult for the driver or a third party to see the operation surface 43, thereby preventing deterioration in crime prevention and appearance. Since the operation device 42 is accommodated in the recess 32, the storage space of the front rack 31 is not narrowed even when the operation device 42 is provided in the front rack 31. In an emergency, the driver looks up at the front rack 31 by lowering the posture, and the operation surface 43 of the upper portion of the front rack 31 is easy to see, so that the workability of the operation device 42 is improved.

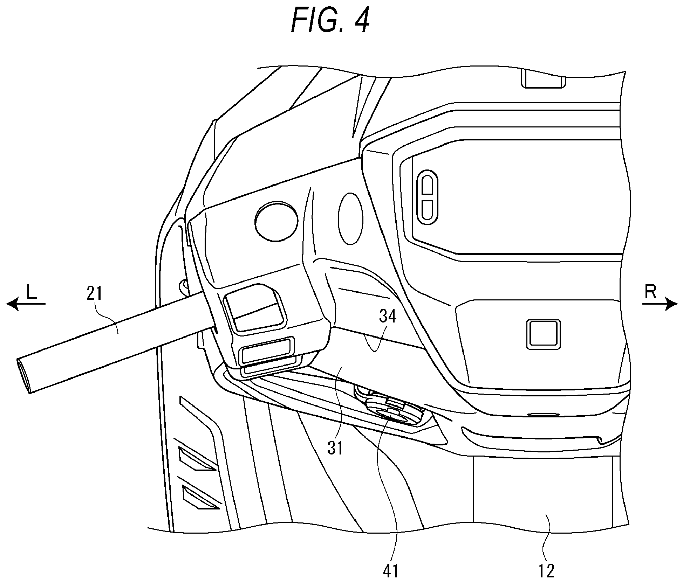

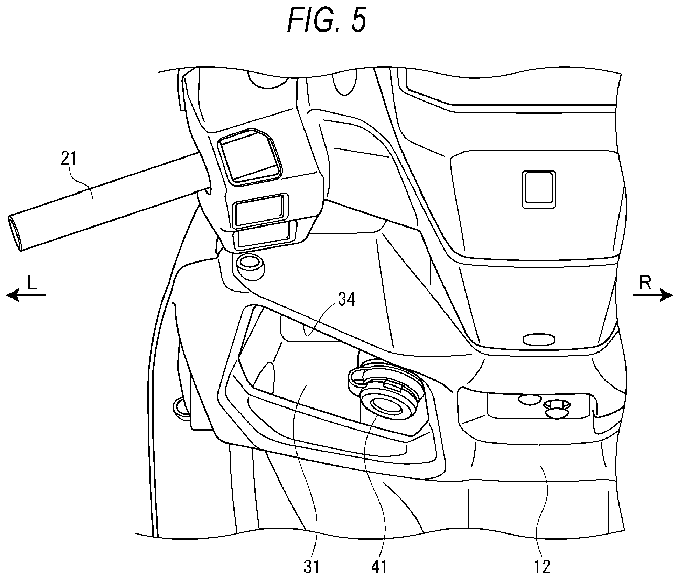

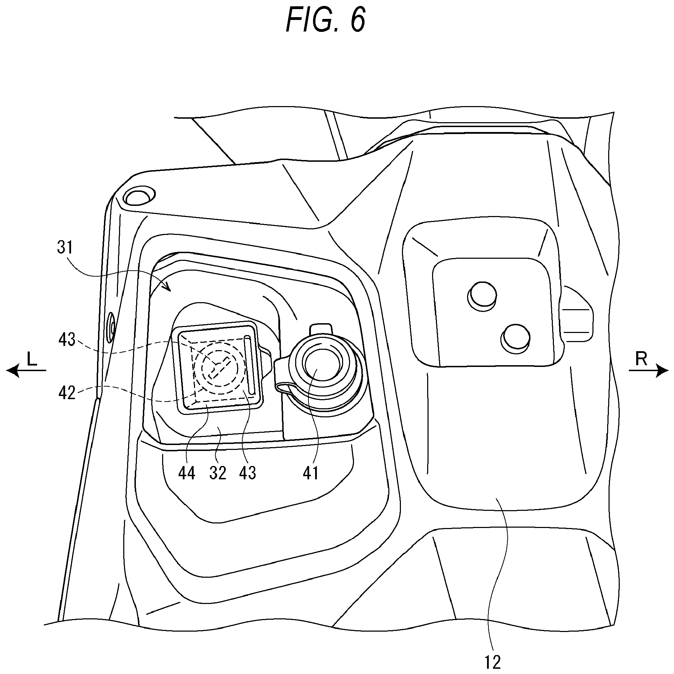

The layout of the operation device and the appearance of the front rack will be described with reference to FIGS. 3 to 6. FIG. 4 is a view of the vehicle rear portion in FIG. 3 as viewed from a direction F1. FIG. 5 is a view of the vehicle rear portion in FIG. 3 as viewed from a direction F2. FIG. 6 is a view of the vehicle rear portion in FIG. 3 as viewed from a direction F3. FIG. 3 shows an example of a line of sight LA of the driver and a line of sight LB of the passenger.

As shown in FIG. 3, the front rack 31 is attached to the front leg shield 12 from the inside. The inside of the front rack 31 is exposed from the opening of the front leg shield 12. The front side of the upper surface of the front rack 31 is inclined so as to be lowered toward the front. The recess 32 having an inverted V shape in the side view is formed on the rear side of the upper surface of the front rack 31. As described above, the installation surface 33 for the operation device 42 is formed on the front inclined surface of the recess 32. At this time, the installation surface 33 for the operation device 42 is located above a straight line L1 that connects an upper edge 34 of the opening of the front rack 31 and an upper edge 36 of an inner bottom surface 35 of the front rack 31.

Since the operation device 42 is located above the straight line L1 inside the front rack 31, the operation surface 43 cannot be seen from above the straight line L1 outside the front rack 31. In the present embodiment, the straight line L1 intersects the ground surface at an angle of approximately 15 degrees, and the straight line L1 is inclined so as to become higher toward the vehicle rear side. In a state in which the driver is seated on the seat of the driver and the passenger is seated on the rear seat, since the heights of the eyes of the driver and the passenger are positioned above the straight line L1, the driver and the passenger cannot see the operation surface 43 in a state of being seated on the seat of the driver and the rear seat. Therefore, even when the operation device 42 is provided in the front rack 31, deterioration in appearance is prevented.

For example, as shown in FIGS. 3 and 4, when the driver seated on the seat of the driver looks at the front rack 31, the line of sight LA of the driver is blocked by the upper edge 34 of the opening edge of the front rack 31 (the front leg shield). Therefore, the driver can barely see the inner side of the front rack 31 from the seat of the driver. As shown in FIGS. 3 and 5, when the passenger seated on the rear seat looks at the front rack 31, the line **of sight** LB of the passenger is blocked by the upper edge 34 of the opening edge of the front rack 31 (the front leg shield). Therefore, the passenger can only see up to the lower surface of the front rack 31 from the rear seat.

As shown in FIG. 3, in an emergency, the operation surface 43 can be seen by looking up at the front rack 31 from below the straight line L1. A center line L2 of the operation device 42 is inclined so as to become lower toward the rear side. Therefore, when the driver gets off the seat of the driver and takes a posture of looking up at the front rack 31 from obliquely below, the operation surface 43 of the upper portion of the front rack 31 is easy to see. Even when the operation surface 43 on the inner side of the front rack 31 is difficult to see from the seat of the driver, the operation surface 43 on the inner side of the front rack 31 is easy to see by the driver lowering the posture, and the operability of the operation device 42 is improved.

The operation surface 43 is provided inside the recess 32 of the front rack 31 so as to be directly visible. When looking up at the front rack 31, there is no obstacle, and the operation surface 43 is easy to see in an emergency, so that the operability is improved. For example, as shown in FIGS. 3 and 6, when the driver with a lowered posture looks up at the operation surface 43, the line of sight of the driver along the center line L2 of the operation device 42 is not blocked by the obstacle. Therefore, in an emergency, the device cover 44 of the recess 32 of the front rack 31 is opened, and the driver can unlock the seat lock by inserting the mechanical key into the keyhole of the operation surface 43 while looking directly at the operation device 42.

At this time, it is desirable that an angle α formed by the line of sight LA of the driver from the seat of the driver and the center line L2 of the operation device 42 and an angle β formed by the line of sight LB of the passenger from the rear seat and the center line L2 of the operation device 42 each fall within the range of 90 ± 20 degrees. In the present embodiment, the angle formed by the line of sight LA of the driver and the center line L2 of the operation device 42 is set to 105.6 degrees, and the angle formed by the line of sight LB of the passenger and the center line L2 of the operation device 42 is set to 89.7 degrees. The intersection angle between the line of sight at the time of riding and the line of sight at the time of emergency operation is brought close to being orthogonal, so that the operation surface 43 becomes difficult to see at the time of riding and the operation surface 43 becomes easy to see at the time of emergency.

As described above, according to the installation structure for the operation device 42 in the present embodiment, in a normal state, the driver and the third party look down at the front rack 31, and the installation surface 33 of the upper portion of the front rack 31 is positioned in a blind spot for the driver and the third party. The operation surface 43 that is exposed from the installation surface 33 is inconspicuous, and deterioration in crime prevention and appearance is prevented. **In** an emergency, the driver lowers the posture and looks up at the front rack 31 from below, so that the operation surface 43 can be easily seen, and the storage space of the front rack 31 is used as a working space, thereby improving the workability.

**In** the present embodiment, the key cylinder for the mechanical key is exemplified as the operation device, and the operation device is not limited to the key cylinder as long as the operation device can receive the operation of the driver. For example, the operation device may include a switch or a dial.

**In** the present embodiment, the operation device is provided in the recess of the front rack. Alternatively, the operation device may be provided on the upper portion of the front rack.

**In** the present embodiment, although the installation surface for the operation device faces obliquely downward and rearward, it is sufficient that the installation surface for the operation device faces at least downward, and for example, the installation surface for the operation device may face directly downward.

**In** the present embodiment, the seat lock is unlocked by the operation device. Alternatively, any operation may be performed on each part of the vehicle by the operation device.

The installation structure for the operation device according to the present embodiment is not limited to the straddle-type vehicle described above, and can be applied to a straddle-type vehicle including a front rack. The straddle-type vehicle is not limited to a general vehicle in which a driver rides on a seat in a posture straddling the seat, and includes a scooter-type vehicle in which the driver rides on the seat without straddling the seat.

As described above, a first aspect is an installation structure for an operation device (42) that is provided on an inner side of a front rack (31) of a straddle-type vehicle (1), in which an installation surface (33) on which the operation device is provided is formed on an upper portion of the front rack, and in which an operation surface (43) of the operation device that is exposed from the installation surface faces downward. According to this configuration, in a normal state, the driver and the third party look down at the front rack, and the installation surface of the upper portion of the front rack is positioned in a blind spot for the driver and the third party. The operation surface that is exposed from the installation surface is inconspicuous, and deterioration in crime prevention and appearance is prevented. In an emergency, the driver lowers the posture and looks up at the front rack from below, so that the operation surface can be easily seen, and the storage space of the front rack is used as a working space, thereby improving the workability.

A second aspect is directed to the first aspect, in which the installation surface is located above a straight line (L1) that connects an upper edge (34) of an opening of the front rack and an upper edge (36) of an inner bottom surface (35). According to this configuration, since the eyes of the driver and the passenger are normally located above the straight line, the driver and the passenger cannot see the operation surface, and deterioration in appearance is prevented.

A third aspect is directed to the first aspect or the second aspect, in which a center line (L2) of the operation device is inclined so as to be lowered toward a rear side. According to this configuration, when the driver gets off the seat of the driver and takes a posture of looking up at the front rack from obliquely below, the operation surface of the upper portion of the front rack is easy to see. Even when the operation surface on the inner side of the front rack is difficult to see from the seat of the driver, the operation surface on the inner side of the front rack is easy to see by the driver lowering the posture, and the operability of the operation device is improved.

A fourth aspect is directed to any one of the first to third aspects, in which the upper portion of the front rack is recessed upward to form a recess (32), and in which the installation surface is formed in the recess. According to this configuration, it is difficult for the driver or a third party in an upright posture to see the operation surface in a normal state, thereby preventing deterioration in crime prevention and appearance. The operation device is accommodated in the recess, so that the storage space of the front rack is not narrowed even when the operation device is provided in the front rack.

A fifth aspect is directed to the fourth aspect, in which the operation surface is provided inside the recess so as to be directly visible. According to this configuration, when looking up at the recess, there is no obstacle, and the operation surface is easy to see in an emergency, so that the operability is improved.

Although the present embodiment has been described, a part or all of the embodiment and modifications described above may be combined as another embodiment.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An installation structure for an operation device (42), the installation structure being provided in an inner side of a front rack (31) of a straddle-type vehicle (1),
wherein an installation surface (33) on which the operation device (42) is installed is formed on an upper portion of the front rack (31), and
wherein an operation surface (43) of the operation device (42) faces downward, the operation surface being exposed from the installation surface (33).

2. The installation structure for an operation device (42) according to claim 1,
wherein the installation surface (33) is located above a straight line (L1) that connects an upper edge (34) of an opening of the front rack (31) and an upper edge (36) of an inner bottom surface (35).

3. The installation structure for an operation device (42) according to claim 1 or 2,
wherein a center line (L2) of the operation device (42) is inclined so as to be lowered toward a rear side.

4. The installation structure for an operation device (42) according to claim 1 or 2,
wherein the upper portion of the front rack (31) is recessed upward to form a recess (32), and
wherein the installation surface (33) is formed in the recess (32).

5. The installation structure for an operation device (42) according to claim 4,
wherein the operation surface (43) is provided inside the recess (32) so as to be directly visible.
